# EUROPÄISCHE PATENTANMELDUNG

(11) **EP 0 950 688 A1**
(43) Veröffentlichungstag der Anmeldung: **20.10.1999**
(21) Anmeldenummer: 99102610.5
(22) Anmeldetag: 11.02.1999
(51) Int. Cl.: C08L 27/06, C08K 3/22

(54) **Polyvinylchlorid-Bodenbelag**

(30) Priorität: 17.04.1998 DE 19817200
(71) Anmelder: Dunlop Tech GmbH, 63450 Hanau/Main (DE)
(72) Erfinder: Neumann, Uwe, 60487 Frankfurt (DE); Seibert, Walter, 63486 Bruchköbel (DE)
(74) Vertreter: Manitz, Finsterwald & Partner

(57) **Zusammenfassung**

Es wird ein Polyvinylchlorid-Bodenbelag zur Verfügung gestellt, der eine geringe Rauchentwicklung beim Brand sowie eine geringere Chlorwasserstoffkonzentration im Rauchgas aufweist als herkömmliche Polyvinylchlorid-Bodenbeläge. Er enthält neben Polyvinylchlorid und üblichen Zusätzen Polyvinylbutyral und feinteiliges Magnesiumhydroxid. In einer bevorzugten Ausführungsform enthält er die Bestandteile in solchen Mengenverhältnissen, daß er die Anforderung der IMO-Resolution MSC 61(67) bezüglich Rauchgasdichte und Chlorwasserstoffkonzentration im Rauchgas erfüllt.

## Beschreibung

Die vorliegende Erfindung betrifft Polyvinylchlorid-Bodenbeläge.

Diese Bodenbeläge zeichnen sich durch Strapazierfähigkeit, Abriebfestigkeit, Chemikalienbeständigkeit, Dimensionsstabilität und Schwerentflammbarkeit aus. Außerdem sind sie preiswert. Nachteilig an Polyvinylchlorid-Bodenbeläge ist die relativ starke Rauchentwicklung beim Brand sowie die Toxizität der Brandgase auf Grund der Chlorwasserstoffentwicklung.

In einigen Bereichen werden die Zulassungsbedingungen für Bodenbeläge schärfer. So tritt zum Beispiel Mitte 1998 die IMO-Resolution MSC 61(67) (International Maritime Organization) in Kraft, die die Zulassungsbedingungen für Bodenbeläge regelt, die zur Verwendung auf Schiffen vorgesehen sind. Diese IMO-Resolution sieht zusätzlich zur Prüfung auf Schwerentflammbarkeit die Prüfung auf Rauchgasdichte und Toxizität der Brandgase vor. Die Rauchgasdichte darf nach der in dieser Resolution vorgesehenen Meßmethode einen Mittelwert von 500 nicht überschreiten. Ferner darf die Chlorwasserstoffkonzentration bei der maximalen Rauchgasdichte einen Grenzwert von 600 ppm nicht überschreiten. Diese Anforderungen werden von herkömmlichen Polyvinylchlorid-Bodenbelägen nicht erfüllt.

So wird der Grenzwert für die Rauchgasdichte in der Regel um das Doppelte überschritten, und bei der Toxizitätsprüfung überschreitet die Chlorwasserstoffkonzentration den Grenzwert um etwa das Dreifache.

Es ist bekannt, daß feinteiliges Aluminiumhydroxid und feinteiliges Magnesiumhydroxid halogenfreie Flammschutzmittel für Kunststoffe und Elastomere sind, die die Rauchgasdichte herabsetzen. Ferner ist bekannt, daß die Verwendung von feinteiligem Calciumcarbonat die Chlorwasserstoffkonzentration in Brandgasen reduziert.

Aufgabe der vorliegenden Erfindung ist es, einen Polyvinylchlorid-Bodenbelag zur Verfügung zu stellen, der eine geringere Rauchgasdichte und eine geringere Chlorwasserstoffkonzentration im Rauchgas aufweist als herkömmliche Polyvinylchlorid-Bodenbeläge, ohne daß die anderen Eigenschaften, wie Schwerentflammbarkeit, Abriebfestigkeit, Chemikalienbeständigkeit, Rückstellvermögen und Dimensionsstabilität beeinträchtigt werden. Gemäß einer bevorzugten Ausführungsform soll der Polyvinylchlorid-Bodenbelag die Anforderungen der IMO-Resolution MSC 61(67) für Bodenbeläge auf Schiffen erfüllen.

Die obige Aufgabenstellung wird durch einen Polyvinylchlorid-Bodenbelag gelöst, der neben üblichen Zusätzen Polyvinylbutyral und feinteiliges Magnesiumhydroxid enthält.

Überraschenderweise wurde festgestellt, daß durch die Kombination von Polyvinylbutyral und Magnesiumhydroxid in Polyvinylchlorid-Bodenbelägen sowohl die Rauchgasdichte als auch die Chlorwasserstoffkonzentration im Rauchgas herabgesetzt werden können, ohne daß die anderen Eigenschaften verschlechtert werden. Der alleinige Zusatz von Magnesiumhydroxid oder Polyvinylbutyral ergibt keine ausreichende Herabsetzung der Rauchgasdichte und der Chlorwasserstoffkonzentration im Rauchgas. Erst der kombinierte Gehalt an Magnesiumhydroxid und Polyvinylbutyral im Polyvinylchlorid-Bodenbelag liefert einen Bodenbelag mit den gewünschten Eigenschaften. Das Magnesiumhydroxid ersetzt einen Teil des üblicherweise zugesetzten Füllstoffs und verringert nicht nur die Rauchgasdichte, sondern reagiert auch mit dem aus dem Polyvinylchlorid entstehenden Chlorwasserstoff und wirkt somit als Chlorwasserstoffänger. Das Polyvinylbutyral ersetzt einen Teil des Polyvinylchlorids, wodurch weniger Chlorwasserstoff und weniger Rauch bei der Verbrennung entstehen, so daß nicht nur die Chlorwasserstoffkonzentration im Rauchgas herabgesetzt wird, sondern auch die Rauchgasdichte.

Das Magnesiumhydroxid wird in feinteiliger Form der Formulierung für den Polyvinylchlorid-Bodenbelag zugesetzt. Es weist eine hohe Reaktivität auf, um den Chlorwasserstoff schnell abzufangen, und das gebildete Magnesiumchlorid weist eine ausreichend hohe thermische Stabilität auf. Vorzugsweise weist das Magnesiumhydroxid eine Teilchengröße von d₅₀<1 µm auf.

Der Gehalt an Magnesiumhydroxid im Bodenbelag liegt vorzugsweise nicht über 39 Gew.-%, bezogen auf das Gesamtgewicht des Bodenbelags, um eine gute Verarbeitbarkeit der Formulierung zum Belag zu gewährleisten. Das Gewichtsverhältnis von Polyvinylchlorid zu Magnesiumhydroxid liegt vorzugsweise im Bereich von 1:0,6 bis 1:1,5.

Als Polyvinylbutyral wird vorzugsweise eine hochacetalisierte und hochviskose Type eingesetzt. Das Polyvinylbutyral liegt aus Kostengründen vorzugsweise in einer solchen Menge in dem Bodenbelag vor, daß das Gewichtsverhältnis von Polyvinylchlorid zu Polyvinylbutyral nicht unter 1:2 liegt. Ebenfalls aus Kostengründen wird vorzugsweise Polyvinylbutyral-Recyclat eingesetzt, das außer Polyvinylbutyral Weichmacher enthält.

Daher kann bei Verwendung des Recyclats die übliche Menge des Weichmacherzusatzes zu den Formulierungen für den Polyvinylchlorid-Bodenbelag verringert werden. Die Gewichtsmenge an Weichmacher im Bodenbelag beträgt im allgemeinen etwa ein Drittel der Gesamtgewichtsmenge an Polyvinylchlorid und Polyvinylbutyral. Die in der vorliegenden Erfindung angegebenen Polyvinylbutyralmengen beziehen sich bei Einsatz von Recyclat jeweils auf den Polyvinylbutyralgehalt des Recyclats.

Als übliche Zusätze kann der erfindungsgemäße Polyvinylchlorid-Bodenbelag folgende Bestandteile enthalten. Stabilisatoren gegen den thermischen Abbau des Polyvinylchlorids während der Verarbeitung zum Bodenbelag, zum Beispiel Calcium-, Cadmium-und Bariumstearate; Antistatika, um die elektrische Aufladung des Bodenbelags durch Reibung zu verhindern, zum Beispiel Glykolester; Weichmacher, zum Beispiel Dioctylphthalat; Füllstoffe, zum Beispiel Calciumcarbonat, Glimmer, Talkum, Siliciumdioxid, Bariumsulfat; Gleitmittel, um ein Anhaften des Materials auf Walzen bei der Verarbeitung zum Bodenbelag zu verhindern, zum Beispiel Stearinsäure; Stoffe zur Unterstützung des Stabilisators, zum Beispiel Kolophoniumester; Pigmente zur Farbgebung.

Gemäß einer bevorzugten Ausführungsform werden die Anforderungen der IMO-Resolution MSC 61(67) erfüllt. Der erfindungsgemäße Polyvinylchlorid-Bodenbelag enthält in dieser Ausführungsform Polyvinylchlorid und Polyvinylbutyral in einem Gewichtsverhältnis von 3:1 bis 1:2 und besonders bevorzugt in einem Gewichtsverhältnis von 2,3:1 bis 1,5:1. Liegt das Gewichtsverhältnis über 3:1, so ist die bei der Verbrennung entwickelte Chlorwasserstoffmenge zu hoch, um durch das Magnesiumhydroxid auf Werte unterhalb 600 ppm herabgesetzt zu werden, wenn man den oben angegebenen bevorzugten Maximalgehalt an Magnesiumhydroxid im Bodenbelag nicht überschreiten will. Wie ebenfalls weiter oben angegeben, liegt das Gewichtsverhältnis von Polyvinylchlorid zu Polyvinylbutyral vor allem aus Kostengründen vorzugsweise nicht unter 1:2.

In der bevorzugten Ausführungsform, die der IMO-Resolution MSC 61(67) genügt, beträgt das Gewichtsverhältnis von Polyvinylchlorid zu Magnesiumhydroxid höchstens 1:1. Ein bevorzugter Bereich für dieses Gewichtsverhältnis beträgt 1:1,2 bis 1:1,5.

Eine typische Zusammensetzung für die bevorzugte Ausführungsform des Bodenbelags enthält 10 bis 30 Gew.-% Polyvinylchlorid, 6 bis 20 Gew.-% Polyvinylbutyral` 10 bis 39 Gew.-% Magnesiumhydroxid und Rest übliche Zusatzstoffe, wobei das Gewichtsverhältnis von Polyvinylchlorid zu Magnesiumhydroxid nicht über 1:1 und das Gewichtsverhältnis von Polyvinylchlorid zu Polyvinylbutyral nicht unter 1:2 liegt.

Die Erfindung wird an Hand des folgenden Beispiels näher beschrieben.

Die in der folgenden Tabelle angegebenen Komponenten wurden in einem Kneter gemischt und dann auf einem Kalander zu einer Folie verarbeitet.

| Komponente | Menge Gew.-% |
|---|---|
| S-PVC¹⁾ | 10,00 |
| E-PVC²⁾ | 10,00 |
| PVB-Recyclat³⁾ | 12,50 |
| Stabilisator⁴⁾ | 0,66 |
| Antistatikum⁵⁾ | 1,20 |
| Weichmacher⁶⁾ | 9,61 |
| Füller⁷⁾ | 26,90 |
| Magnesiumhydroxid⁸⁾ | 26,90 |
| Gleitmittel⁹⁾ | 0,10 |
| Thermoplastisches Harz¹⁰⁾ | 0,13 |
| Pigment¹¹⁾ | 2,0 |

| | |
|---|---|
| 1) Durch Suspensionspolymerisation hergestelltes Polyvinylchlorid | |
| 2) Durch Emulsionspolymerisation hergestelltes Polyvinylchlorid | |
| 3) Aus der Autoscheibenproduktion stammendes Polyvinylbutyral-Recyclat mit 20 Gew.-% Weichmacher und 80 Gew.-% Polyvinylbutyral,Mowital^{R} B70H der Hoechst AG | |
| 4) Calcium- und Zinkstearat, Bärostab^{R} MV 8056 CP der Bärlocher GmbH | |
| 5) Fettsäureester, Bärostat^{R} 318 S der Bärlocher GmbH | |
| 6) Dioctylphthalat | |
| 7) Calciumcarbonat | |
| 8) Magnefin^{R} der Martinswerk GmbH | |
| 9) Stearinsäure | |
| 10) Neolyn^{R} 5023F der Hercules Europe S.A., wirkt als Stabilisator | |
| 11) Titandioxid | |

Die Folie wurde gemäß der IMO-Resolution MSC 61(67), Annex 1 Part 2 auf Rauchentwicklung und Toxizität geprüft. Dazu wurden Probekörper der Folie mit den Maßen 75 x 75 x 1,8 mm (Flächengewicht: 2916 g/m²) in einer Kammer einer Bestrahlungsstärke von 25 kW/m² bei vorhandener Zündflamme, einer Bestrahlungsstärke von 25 kW/m² ohne Zündflamme und einer Bestrahlungsstärke von 50 kW/m² ohne Zündflamme jeweils 10 Minuten oder 20 Minuten ausgesetzt. In allen Fällen lag der Mittelwert der Rauchgasdichte deutlich unter 500.

Für die Toxitätsmessungen wurden dem Rauch unter jeder der oben genannten Prüfbedingungen aus der geometrischen Mitte der Kammer Proben innerhalb von 3 Minuten während der Zeit entnommen, in der der Rauch die maximale spezifische optische Dichte erreicht hatte. Die Chlorwasserstoffkonzentration lag in allen Fällen weit unter 600 ppm.

Der Fußbodenbelag mit der obigen Zusammensetzung erfüllt ebenfalls die Anforderungen an die Schwerentflammbarkeit gemäß IM0-Resolution A.653 (16).

## Patentansprüche

1. Polyvinylchlorid-Bodenbelag, der neben üblichen Zusätzen Polyvinylbutyral und Magnesiumhydroxid enthält.

2. Bodenbelag nach Anspruch 1, dadurch gekennzeichnet, daß er Polyvinylbutyral-Recyclat enthält.

3. Bodenbelag nach Anspruch 1 oder 2, dadurch gekennzeichnet, daß er höchstens etwa 39 Gew.-% Magnesiumhydroxid enthält, bezogen auf das Gesamtgewicht des Bodenbelags.

4. Bodenbelag nach einem der Ansprüche 1 bis 3, dadurch gekennzeichnet, daß er Polyvinylchlorid und Polyvinylbutyral in einem Gewichtsverhältnis nicht unter 1:2 enthält.

5. Bodenbelag nach einem der Ansprüche 1 bis 4, dadurch gekennzeichnet, daß er Polyvinylchlorid und Polyvinylbutyral in einem Gewichtsverhältnis von 3:1 bis 1:2 enthält.

6. Bodenbelag nach Anspruch 5, dadurch gekennzeichnet, daß das Gewichtsverhältnis von Polyvinylchlorid zu Polyvinylbutyral im Bereich von 2,3:1 bis 1,5:1 liegt.

7. Bodenbelag nach einem der Ansprüche 1 bis 6, dadurch gekennzeichnet, daß er Polyvinylchlorid und Magnesiumhydroxid in einem Gewichtsverhältnis von 1:0,6 bis 1:1,5 enthält.

8. Bodenbelag nach Anspruch 7, dadurch gekennzeichnet, daß das Gewichtsverhältnis von Polyvinylchlorid zu Magnesiumhydroxid höchstens 1:1 beträgt.

9. Bodenbelag nach Anspruch 8, dadurch gekennzeichnet, daß das Gewichtsverhältnis von Polyvinylchlorid zu Magnesium-hydroxid im Bereich von 1:1,2 bis 1:1,5 liegt.

10. Bodenbelag nach einem der Ansprüche 1 bis 9, dadurch gekennzeichnet, daß er 10 bis 30 Gew.-% Polyvinylchlorid, 6 bis 20 Gew.-% Polyvinylbutyral, 10 bis 39 Gew.-% Magnesiumhydroxid und Rest übliche Zusatzstoffe enthält, wobei das Gewichtsverhältnis von Polyvinylchlorid zu Magnesiumhydroxid nicht über 1:1 und das Gewichtsverhältnis von Polyvinylchlorid zu Polyvinylbutyral nicht unter 1:2 liegt.
